(19) Europäisches Patentamt / European Patent Office / Office européen des brevets

(11) **EP 4 443 528 B1**

(12) **EUROPEAN PATENT SPECIFICATION**

(45) Date of publication and mention of the grant of the patent:
**28.01.2026 Bulletin 2026/05**

(21) Application number: **22951485.6**

(22) Date of filing: **20.07.2022**

(51) International Patent Classification (IPC):
**H01M 4/04** *(2006.01)*    **H01M 4/139** *(2010.01)*
**H01M 10/04** *(2006.01)*

(52) Cooperative Patent Classification (CPC):
**H01M 4/04; H01M 4/0404; H01M 4/0409;**
**H01M 4/0435; H01M 4/139; H01M 10/04;**
**Y02E 60/10**

(86) International application number:
**PCT/CN2022/106721**

(87) International publication number:
**WO 2024/016207 (25.01.2024 Gazette 2024/04)**

(54) **ELECTRODE PLATE MANUFACTURING DEVICE AND ELECTRODE PLATE MANUFACTURING METHOD**

VORRICHTUNG ZUR HERSTELLUNG VON ELEKTRODENPLATTEN UND VERFAHREN ZUR HERSTELLUNG VON ELEKTRODENPLATTEN

APPAREIL DE FABRICATION DE PLAQUES D'ÉLECTRODES ET PROCÉDÉ DE FABRICATION DE PLAQUES D'ÉLECTRODES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.10.2024 Bulletin 2024/41**

(73) Proprietor: **Contemporary Amperex Technology (Hong Kong) Limited**
**Central, Central And Western District (HK)**

(72) Inventors:
- **WANG, Zheng**
  **Ningde, Fujian 352100 (CN)**
- **LU, Lei**
  **Ningde, Fujian 352100 (CN)**
- **YU, Linzhen**
  **Ningde, Fujian 352100 (CN)**
- **LI, Shisong**
  **Ningde, Fujian 352100 (CN)**
- **ZHANG, Shengwu**
  **Ningde, Fujian 352100 (CN)**
- **HU, Changyuan**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(56) References cited:
CN-A- 105 390 664      CN-A- 112 873 945
CN-A- 114 725 320      CN-U- 216 084 935
CN-U- 216 084 935      JP-A- 2013 215 688
JP-A- H09 106 816      JP-B2- 6 283 917
JP-B2- 6 455 403      US-A1- 2005 236 732

## Description

## Technical Field

The present application relates to a field of batteries, and in particular, to an electrode plate manufacturing device (i.e., device for manufacturing an electrode plate) and an electrode plate manufacturing method (i.e., method for manufacturing an electrode plate).

## Background Art

Batteries are widely used in the field of new energy, for example, electric vehicles, new energy vehicles, etc. New energy vehicles and electric vehicles have become a new trend in the development of the automobile industry. The battery includes an electrode assembly which is a component where electrochemical reactions occur, in the battery. The electrode assembly is formed mainly by winding or stacking a positive electrode plate and a negative electrode plate.

At present, the manufacturing of an electrode plate is performed mainly by a wet method technology and a dry method technology. However, the performance of the electrode plate manufactured by the dry method technology is often poor. An electrode plate manufacturing device according to the preamble of claim 1 and an electrode plate manufacturing method according to the preamble of claim 15 is known from US2005236732A1.

## Summary

An object of embodiments of the present application is to provide an electrode plate manufacturing device and an electrode plate manufacturing method, which aim to alleviate the problem that the performance of the electrode plate manufactured by the dry method technology in the related art is often poor.

In a first aspect, embodiments of the present application provides an electrode plate manufacturing device, wherein the electrode plate manufacturing device includes an extrusion mechanism, a film forming mechanism and a combination mechanism, the extruding mechanism is used for extruding out an active material slurry to form a blank; the film forming mechanism is provided downstream of the extrusion mechanism, and the film forming mechanism is used to thin the blank to form a film; and the combination mechanism is arranged downstream of the film forming mechanism, and the combination mechanism is used to combine the film and a substrate to form an electrode plate.

In the above technical solution, the electrode plate manufacturing device extrudes, through the extrusion mechanism, the active material slurry out to form a blank, so that the powder and particles in the active material slurry can be mixed evenly. The blank is formed into a film through the film forming mechanism, which is beneficial to controlling the thickness and uniformity of the formed film, compared to directly forming a film from the active material powder and particles. By using the electrode plate manufacturing device to manufacture the electrode plate, the uniformity of the active material layer is good, the performance of the electrode plate is excellent, and the manufacturing efficiency is high.

As an optional technical solution of embodiments of the present application, the film forming mechanism includes a rolling mechanism, and the rolling mechanism is used for rolling the blank to thin the blank to form the film.

In the above technical solution, by means of rolling the blank using the rolling mechanism, the blank is thinned to form the film, enabling high efficiency and good uniformity.

As an optional technical solution of embodiments of the present application, the rolling mechanism includes multiple pressure rollers, wherein a rolling gap for allowing the blank to pass therethrough is formed between two adjacent pressure rollers.

In the above technical solution, by providing the multiple pressure rollers, the multiple pressure rollers can gradually thin the blank to form the film, wherein the degree of thinning each time may not be too large, which is beneficial to improving the uniformity and thickness consistency of the film.

As an optional technical solution of embodiments of the present application, multiple rolling gaps are formed between the multiple pressure rollers, and the widths of the multiple rolling gaps gradually decrease in the conveying direction of the blank.

In the above technical solution, the widths of the multiple rolling gaps gradually decrease in the conveying direction of the blank, facilitating thinning the blank gradually such that the degree of thinning each time may not be too large, which is beneficial to improving the uniformity and thickness consistency of the film.

As an optional technical solution of embodiments of the present application, in the conveying direction of the blank, the pressure roller located at the tail end in the multiple pressure rollers is a first pressure roller, and the combination mechanism includes a combination roller, wherein a combination gap for allowing the film and the substrate to pass therethrough is formed between the combination roller and the first pressure roller.

In the above technical solution, the combination roller cooperates with the first pressure roller to roll the film and the substrate, to combine the film and the substrate into an electrode plate. The first pressure roller is used as both the component for rolling the blank and the component for combining the film and the substrate. One component realizes two functions, simplifying the structure of the electrode plate manufacturing device, and reducing the cost of the electrode plate manufacturing device.

As an optional technical solution of embodiments of the present application, the angular speed of the combination roller is $\omega_1$, the radius of the combination

roller is $r_1$, the angular speed of the first pressure roller is $\omega_2$, and the radius of the first pressure roller is $r_2$, satisfying: $\omega_1 \times r_1 > \omega_2 \times r_2$.

In the above technical scheme, the product of the angular speed of the combination roller and the radius of the combination roller is a first linear speed at which the combination roller rolls the film and the substrate, and the product of the angular speed of the first pressure roller and the radius of the first pressure roller is a second linear speed at which the first pressure roller rolls the film and the substrate. By making the first linear speed greater than the second linear speed, it is beneficial to attaching the combined electrode plate to the combination roller, avoiding that the combined electrode plate randomly shifts to cause the electrode plate to be torn or uneven.

As an optional technical solution of embodiments of the present application, they further satisfy: $r_1 = r_2$ and $\omega_1 > \omega_2$.

In the above technical solution, by making the radius of the combination roller equal to the radius of the first pressure roller and making the angular speed of the combination roller greater than the angular speed of the first pressure roller, the first linear speed is made to be greater than the second linear speed, such that the combined electrode plate is attached to the combination roller, avoiding that the combined electrode plate randomly shifts to cause the electrode plate to be torn or uneven.

As an optional technical solution of embodiments of the present application, they further satisfy: $\omega_1 = \omega_2$ and $r_1 > r_2$.

In the above technical solution, by making the angular speed of the combination roller equal to the angular speed of the first pressure roller and making the radius of the combination roller greater than the radius of the first pressure roller, the first linear speed is made to be greater than the second linear speed, such that the combined electrode plate is attached to the combination roller, avoiding that the combined electrode plate randomly shifts to cause the electrode plate to be torn or uneven.

As an optional technical solution of embodiments of the present application, they further satisfy: $1 < (\omega_1 \times r_1)/(\omega_2 \times r_2) \leq 1.5$.

In the above technical solution, the ratio of the first linear speed to the second linear speed is limited to be greater than 1 and less than or equal to 1.5, which is beneficial to ensuring the quality of rolling and simultaneously enabling the rolled electrode plate to better shift and be attached to the combination roller. For example, when $(\omega_1 \times r_1)/(\omega_2 \times r_2) = 1$, the combined electrode plate cannot be stably attached to the combination roller, and the electrode plate randomly shifts between the combination roller and the first pressure roller, which may cause the electrode plate to be torn or uneven. When $(\omega_1 \times r_1)/(\omega_2 \times r_2) < 1$, the electrode plate may shift to the first pressure roller, and the first pressure roller is wounded by both the film and the electrode plate, which may easily lead to production disorder. When $(\omega_1 \times r_1)/(\omega_2 \times r_2) > 1.5$, the difference between the first linear speed of the combination roller and the second linear speed of the first pressure roller is too large, resulting in a poor rolling effect on the film and the substrate, i.e., poor combination effect.

As an optional technical solution of embodiments of the present application, the angular speed of the combination roller is $\omega_1$, and the radius of the combination roller is $r_1$, satisfying: $1m/min \leq \omega_1 \times r_1 \leq 100m/min$.

In the above technical solution, the first linear speed of the combination roller is limited to 1-100 m/min, so as to ensure good rolling quality while having high rolling efficiency. When $\omega_1 \times r_1 < 1m/min$, although the rolling quality is good, the rolling speed is too slow and the rolling efficiency is low. When $\omega_1 \times r_1 > 100m/min$, although the rolling efficiency is high, the rolling quality is poor.

As an optional technical solution of embodiments of the present application, the width of the combination gap is 0-60 $\mu m$ larger than the width of the rolling gap located at the extreme end in the conveying direction of the blank.

In the above technical solution, since the thickness of the substrate is generally 0-60 $\mu m$, the width of the combination gap is 0-60 $\mu m$ larger than the width of the rolling gap located at the extreme end. The width of the combination gap may be equal to the width of the rolling gap located at the extreme end in the conveying direction of the blank, so that in the combination gap, the film and the substrate may be flattened and compacted to ensure that the film is not separated from the substrate.

As an optional technical solution of embodiments of the present application, in the conveying direction of the blank, in the two adjacent pressure rollers, the pressure roller near the head end is a second pressure roller, and the pressure roller near the tail end is a third pressure roller, the angular speed of the second pressure roller is $\omega_3$, the radius of the second pressure roller is $r_3$, the angular speed of the third pressure roller is $\omega_4$, and the radius of the third pressure roller is $r_4$, satisfying: $\omega_3 \times r_3 < \omega_4 \times r_4$.

In the above technical scheme, the product of the angular speed of the second pressure roller and the radius of the second pressure roller is a third linear speed at which the second pressure roller rolls the blank, and the product of the angular speed of the third pressure roller and the radius of the third pressure roller is a fourth linear speed at which the third pressure roller rolls the film and the substrate. By making the fourth linear speed greater than the third linear speed, it is beneficial to attaching the rolled blank to the third pressure roller, avoiding that the rolled blank randomly shifts to cause the rolled blank to be torn or uneven.

As an optional technical solution of embodiments of the present application, they further satisfy: $r_3 = r_4$ and $\omega_3 < \omega_4$.

In the above technical solution, by making the radius of the second pressure roller equal to the radius of the third pressure roller and making the angular speed of the third pressure roller greater than the angular speed of the second pressure roller, the fourth linear speed is made to be greater than the third linear speed, such that the rolled blank is attached to the third pressure roller, avoiding that the rolled blank randomly shifts to cause the rolled blank to be torn or uneven.

As an optional technical solution of embodiments of the present application, they further satisfy: $\omega_3=\omega_4$ and $r_3<r_4$.

In the above technical solution, by making the angular speed of the second pressure roller equal to the angular speed of the third pressure roller and making the radius of the third pressure roller greater than the radius of the second pressure roller, the fourth linear speed is made to be greater than the third linear speed, such that the rolled blank is attached to the third pressure roller, avoiding that the rolled blank randomly shifts to cause the rolled blank to be torn or uneven.

As an optional technical solution of embodiments of the present application, they further satisfy: $1<(\omega_4\times r_4)/(\omega_3\times r_3)\leq1.5$.

In the above technical solution, the ratio of the fourth linear speed to the third linear speed is limited to be greater than 1 and less than or equal to 1.5, which is beneficial to ensuring the quality of rolling and simultaneously enabling the rolled blank to better shift and be attached to the third pressure roller. For example, when $\omega_3\times r_3=1$, the rolled blank cannot be stably attached to the third pressure roller, and the rolled blank randomly shifts between the second pressure roller and the third pressure roller, which may cause the rolled blank to be torn or uneven. When $\omega_1\times r_1<1$, the rolled blank may shift towards the second pressure roller, which may easily lead to production disorder. When $\omega_1\times r_1>1.5$, the difference between the fourth linear speed of the third pressure roller and the third linear speed of the second pressure roller is too large, resulting in a poor rolling effect on the blank and thus poor film quality.

As an optional technical solution of embodiments of the present application, the film forming mechanism further includes a detection unit and an adjustment mechanism, wherein the detection unit is used to detect the roller pressure of each of the pressure rollers for rolling the blank; and the adjustment mechanism is connected with the pressure roller, and the adjustment mechanism is used to increase or decrease the pressure applied to the pressure roller according to the detection result of the detection unit.

In the above technical solution, the detection unit is provided to detect the roller pressure for rolling the blank, and when the roller pressure is relatively large, the adjustment mechanism reduces the pressure applied to the pressure roller. When the roller pressure is relatively small, the adjustment mechanism increases the pressure applied to the pressure roller, so that the roller pressure remains within a preset range. As a result, the roller pressure for rolling the blank is relatively uniform, which is beneficial to improving the quality of the formed film.

As an optional technical solution of embodiments of the present application, the film forming mechanism includes a first extrusion element and a second extrusion element, wherein the second extrusion element is arranged opposite to the first extrusion element, and the second extrusion element and the first extrusion element are used to cooperate with each other to extrude the blank to thin the blank to form the film

In the above technical solution, the blank is extruded through the first extrusion element and the second extrusion element, such that the blank is extruded and thinned to form the film, enabling high extrusion efficiency and small occupied area.

In a second aspect, embodiments of the present application further provide an electrode plate manufacturing method. The electrode plate manufacturing method includes extruding out an active material slurry to form a blank; thinning the blank to form a film; and combining the film and a substrate to form an electrode plate.

**Brief Description of Drawings**

In order to more clearly illustrate the technical solutions of the embodiments of the present application, the drawings that are required to be used in the embodiments will be briefly introduced below. It should be understood that the following drawings only show some embodiments of the present application, and thus It should not be regarded as a limitation on the scope, and those skilled in the art can also obtain other related drawings based on these drawings without paying creative work.

FIG. 1 is a schematic block diagram of an electrode plate manufacturing device provided in some embodiments of the present application;

FIG. 2 is a schematic structural view of an electrode plate manufacturing device (two pressure rollers) provided in some embodiments of the present application;

FIG. 3 is a schematic structural view of an electrode plate manufacturing device (more than two pressure rollers) provided in some embodiments of the present application;

FIG. 4 is a schematic structural view of an electrode plate manufacturing device (the roller diameter of the combination roller is larger than the roller diameter of the first pressure roller) provided in some embodiments of the present application;

FIG. 5 is a schematic structural view of an electrode plate manufacturing device (the roller diameter of the second pressure roller is smaller than the roller diameter of the third pressure roller) provided in some embodiments of the present application;

FIG. 6 is a schematic structural view of an electrode plate manufacturing device provided in some other embodiments of the present application;

FIG. 7 is a schematic block diagram of a film forming mechanism provided in some embodiments of the present application;

FIG. 8 is a schematic structural view of an electrode plate manufacturing device provided in yet some embodiments of the present application; and

FIG. 9 is a schematic block diagram of an electrode plate manufacturing method provided in some embodiments of the present application.

Reference signs: 10-electrode plate manufacturing device; 100-extrusion mechanism; 200-film forming mechanism; 210-rolling mechanism; 211-first pressure roller; 212-second pressure roller; 213-third pressure roller; 214-rolling gap; 220-detection unit; 230-adjustment mechanism; 240-first extrusion element; 250-second extrusion element; 300-combination mechanism; 320-combination gap; 400-blank; 500-film; 600-substrate; 700-electrode plate.

**Detailed Description of Embodiments**

Embodiments of the technical solutions of the present application will be described in detail below in conjunction with the drawings. The following embodiments are only used to illustrate the technical solutions of the present application more clearly, and therefore are only examples, rather than limiting the protection scope of the present application.

Unless otherwise defined, all technical and scientific terms used herein have the same meaning as commonly understood by those skilled in the technical field of the present application. The terms used herein are only for the purpose of describing embodiments, and are not intended to limit the present application. Terms "comprising" and "having" and any variations thereof in the specification and claims of the present application and the above description of the drawings are intended to cover a non-exclusive inclusion.

In the description of the embodiments of the present application, technical terms such as "first" and "second" are only used to distinguish different objects, and should not be understood as indicating or implying importance in relativity or implicitly indicating the number, specific sequence, or primary-subordinate relationship of the indicated technical features. In the description of the embodiments of the present application, "plurality" means two or more, unless otherwise specifically defined.

Reference made herein to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In description of the embodiments of the present application, the term "and/or" in the present application indicates only an association relationship describing associated objects, meaning that there may be three kinds of relationships. For example, A and/or B may indicate three situations: there is only A, there are both A and B, and there is only B. In addition, the character "/" here generally indicates that the associated objects therebefore and thereafter have an "or" relationship.

In the description of the embodiments of the present application, "multiple" means two or more (including two). Similarly, "multiple groups" means two or more groups (including two groups), and "multiple pieces" means two or more pieces (including two pieces).

In the description of the embodiments of the present application, the orientation or positional relationship indicated by technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on orientation or positional relationship shown in the drawings, only for the convenience of describing the embodiments of the present application and simplifying the description, rather than indicating or implying that the device or element referred to must have a specific orientation, or be constructed and operated in a specific orientation, and therefore cannot be understood as a limitation on the embodiments of the present application.

In the description of the embodiments of the present application, unless otherwise clearly specified and limited, technical terms such as "install", "link", "connect" and "fix" should be understood in a broad sense, for example, it may be a fixed connection, or a detachable connection, or an integral connection; it may be a mechanical connection, or an electrical connection; it may be a direct connection, or an indirect connection through an intermediary, or it may be an internal communication between two elements or an interaction relationship between two elements. Those of ordinary skill in the art may understand the specific meanings of the above terms in the embodiments of the present application according to specific situations.

At present, from the perspective of the development of the market situation, the application of batteries is becoming more and more extensive. The batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of battery application fields, its market demand is also constantly increasing.

The battery includes an electrode assembly which is a component where electrochemical reactions occur, in the battery. The electrode assembly is formed mainly by winding or stacking a positive electrode plate and a negative electrode plate. The inventors noted that the manufacturing of an electrode plate is performed mainly by a wet method technology and a dry method technology. However, the performance of the electrode plate manufactured by the dry method technology is often poor.

The inventors further studied and found that when using dry method technology to manufacture the electrode plate, the powder and particles of the active material are supplied to the surface of the roller, and the powder and particles of the active material are directly rolled to form a film. For the film formed in this way, the powder and particles of the active material cannot be mixed evenly, and the thickness of the film is also not easy to guarantee. The uniformity of the active material layer of the electrode plate produced using such film is poor, resulting in poor performance of the electrode plate.

In view of this, embodiments of the present application provide an electrode plate manufacturing device, which includes an extrusion mechanism, a film forming mechanism and a combination mechanism. The extrusion mechanism is used to extrude out the active material slurry to form a blank. The film forming mechanism is provided downstream of the extrusion mechanism, and the film forming mechanism is used to thin the blank to form a film. The combination mechanism is provided downstream of the film forming mechanism, and the combination mechanism is used to combine the film and the substrate to form an electrode plate.

The electrode plate manufacturing device extrudes, through the extrusion mechanism, the active material slurry out to form a blank, so that the powder and particles in the active material slurry may be mixed evenly. The blank is formed into a film through the film forming mechanism, which is beneficial to controlling the thickness and uniformity of the formed film, compared to directly forming a film from the active material powder and particles. By using the electrode plate manufacturing device to manufacture the electrode plate, the uniformity of the active material layer is good, the performance of the electrode plate is excellent, and the manufacturing efficiency is high.

The technical solutions described in the embodiments of the present application are applicable to the manufacturing of the electrode plate.

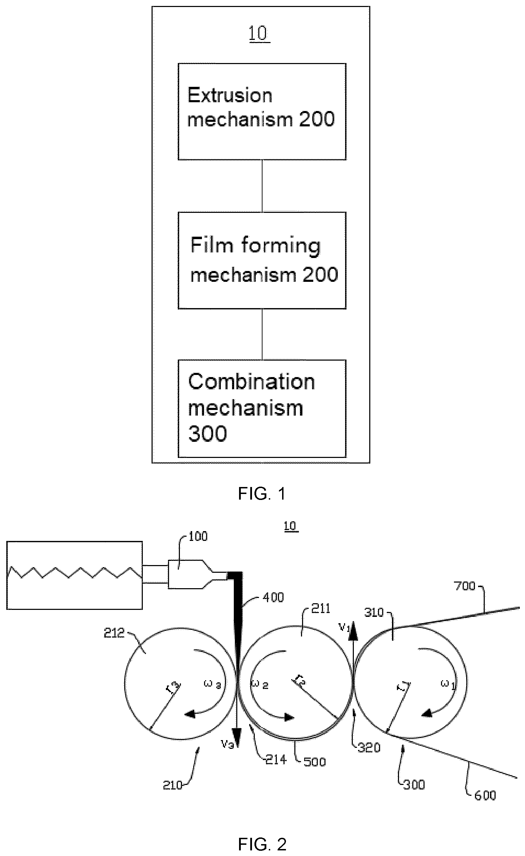

Referring to FIG. 1 and FIG. 2, FIG. 1 is a schematic block diagram of an electrode plate manufacturing device 10 provided in some embodiments of the present application. FIG. 2 is a schematic structural view of an electrode plate manufacturing device 10 (two pressure rollers) provided in some embodiments of the present application. Embodiments of the present application provide an electrode plate manufacturing device 10, the electrode plate manufacturing device 10 including an extrusion mechanism 100, a film forming mechanism 200 and a combination mechanism 300. The extrusion mechanism 100 is used to extrude out the active material slurry to form a blank 400. The film forming mechanism 200 is provided downstream of the extrusion mechanism 100, and the film forming mechanism 200 is used to thin the blank 400 to form a film 500. The combination mechanism 300 is provided downstream of the film forming mechanism 200, and the combination mechanism 300 is used to combine the film 500 and the substrate 600 to form an electrode plate 700.

The extrusion mechanism 100 is a mechanism capable of performing an extrusion molding process. The extrusion mechanism 100 may be used to extrude the active material slurry out to form a blank 400, facilitating mixing the active material evenly. The extrusion mechanism 100 includes, but is not limited to, a plunger extrusion mechanism, a twin-screw extrusion mechanism, a single-screw extrusion mechanism, and the like.

The active material slurry refers to a mixture containing solvent, active material powder and/or active material particles. The active material powder and/or active material particles may be dissolved in the solvent, thereby facilitating uniform mixing. Compared with the solution of containing only active material powder and/or active material particles, it may realize more uniform and thorough mixing. In order to further improve the performance of the film 500, the proportion of the active material powder and/or active material particles may be increased to prepare an active material slurry with high solid content.

The blank 400 is a product formed after extruding the active material slurry. The blank 400 has a relatively large thickness, has a self-supporting capacity, and is not easy to break. The blank 400 generally has a thickness of 1~10mm.

The film forming mechanism 200 is a mechanism capable of thinning the blank 400 to form a film 500. Since the blank 400 is too thick to be directly combined with the substrate 600, the blank 400 is thinned by the film forming mechanism 200 to form the film 500. The film 500 formed by thinning by the film forming mechanism 200 has better active material uniformity and more uniform thickness, which is conducive to improving the quality of the electrode plate 700.

The combination mechanism 300 is a mechanism that combines the film 500 and the substrate 600 to form the electrode plate 700. From the perspective of the electrode plate 700, the film 500 is the active material layer of the electrode plate 700, and the substrate 600 is the current collector of the electrode plate 700. The substrate 600 of the positive electrode plate may be made of aluminum, and the active material of the positive electrode plate may be lithium cobaltate, lithium iron phosphate, ternary lithium, or lithium manganate, etc. The substrate 600 of the negative electrode plate may be made of copper, and the active material of the negative electrode plate may be carbon or silicon, etc.

The electrode plate manufacturing device 10 extrudes, through the extrusion mechanism 100, the active material slurry out to form a blank 400, so that the powder and particles in the active material slurry may be mixed evenly. The blank 400 is formed into a film 500 through the film forming mechanism 200, which is beneficial to controlling the thickness and uniformity of the formed film 500, compared to directly forming a film 500 from the active material powder and particles. By using the electrode plate manufacturing device 10 to manufacture the electrode plate 700, the uniformity of the active material layer is good, the performance of the electrode plate 700 is excellent, and the manufacturing efficiency is high.

Referring to FIG. 2, in some embodiments, the film forming mechanism 200 includes a rolling mechanism 210, and the rolling mechanism 210 is used for rolling the blank 400 to thin the blank 400 to form the film 500.

The rolling mechanism 210 is a mechanism for making a material continuously plastically deformed. When the rolling mechanism 210 rolls the blank 400, the thickness of the blank 400 may be reduced, and the blank 400 may be formed as the film 500 just after the thickness is reduced to meet the design requirement.

By means of rolling the blank 400 using the rolling mechanism 210, the blank 400 is thinned to form the film 500, enabling high efficiency and good uniformity.

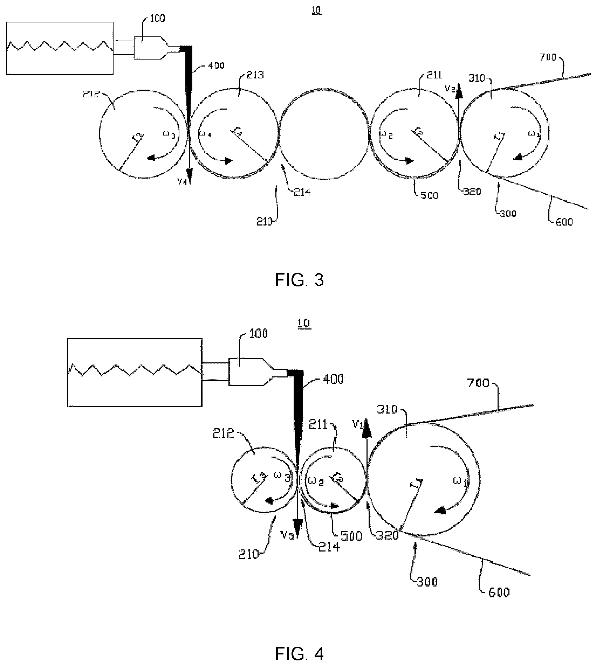

Referring to FIG. 2 and FIG. 3, FIG. 3 is a schematic structural view of an electrode plate manufacturing device 10 (more than two pressure rollers) provided in some embodiments of the present application. In some embodiments, the rolling mechanism 210 includes multiple pressure rollers, and a rolling gap 214 for allowing the blank 400 to pass therethrough is formed between two adjacent pressure rollers.

The "multiple pressure rollers" refers to two pressure rollers, three pressure rollers or more than three pressure rollers. Referring to FIG. 2, FIG. 2 shows the case in which the rolling mechanism 210 includes two pressure rollers. Referring to FIG. 3, FIG. 3 shows the case in which the rolling mechanism 210 includes four pressure rollers.

"A rolling gap 214 for allowing the blank 400 to pass therethrough is formed between two adjacent pressure rollers" means that two adjacent pressure rollers cooperate with each other to roll the blank 400, to reduce the thickness of the blank 400 to be equal to the width of the rolling gap 214.

By providing the multiple pressure rollers, the multiple pressure rollers can gradually thin the blank 400 to form the film 500, wherein the degree of thinning each time may not be too large, which is beneficial to improving the uniformity and thickness consistency of the film 500.

In some embodiments, multiple rolling gaps 214 are formed between the multiple pressure rollers, and the widths of the multiple rolling gaps 214 gradually decrease in the conveying direction of the blank 400.

In "multiple rolling gaps 214 are formed between the multiple pressure rollers", the number of the multiple pressure rollers is at most 1 more than the number of the multiple rolling gaps 214. For example, two pressure rollers form one rolling gap 214. For another example, three pressure rollers form two rolling gap 214. Four pressure rollers form three rolling gap 214. Certainly, the four pressure rollers may also form two rolling gap 214.

A straight line that is located in the same plane as the axes of two adjacent pressure rollers and is perpendicular to the axes of the two adjacent pressure rollers is a first straight line. The intersection point of the first straight line and the circumferential surface of one pressure roller thereof is the first intersection point, the intersection point of the first straight line and the circumferential surface of the other pressure roller is the second intersection point, and the width of the rolling gap 214 is the distance between the first intersection point and the second intersection point. The width of the rolling gap 214 may also be simply understood as the minimum distance between the circumferential surfaces of the two pressure rollers.

The conveying direction of the blank 400 refers to the winding direction in which the blank 400 is wound around the multiple pressure rollers sequentially, rather than the extrusion direction in which the extrusion mechanism 100 extrudes out the blank 400.

The widths of the multiple rolling gaps 214 gradually decrease in the conveying direction of the blank 400, facilitating thinning the blank 400 gradually such that the degree of thinning each time may not be too large, which is beneficial to improving the uniformity and thickness consistency of the film 500.

Referring to FIG. 2 and FIG. 3, in some embodiments, in the conveying direction of the blank 400, in the multiple pressure rollers, the pressure roller located at the tail end is the first pressure roller 211. The combination mechanism 300 includes a combination roller 310, and a combination gap 320 for allowing the film 500 and the substrate 600 to pass therethrough is formed between the combination roller 310 and the first pressure roller 211.

The first pressure roller 211 specifically refers to the pressure roller located at the extreme end in the multiple pressure rollers in the conveying direction of the blank 400. Referring to FIG. 2, in FIG. 2, the rolling mechanism 210 includes two pressure rollers. At this time, the blank 400 may be wound in any direction after passing through the rolling gap 214, and therefore, any one of the two pressure rollers may be used as the first pressure roller 211. Referring to FIG. 3, the rolling mechanism 210 in FIG. 3 includes four pressure rollers, wherein counting from left to right, the blank 400 passes successively through the rolling gap 214 formed between the first pressure roller and the second pressure roller, the rolling gap 214 formed between the second pressure roller and the third pressure roller, and the rolling gap 214 formed between the third pressure roller and the fourth pressure roller, and at this time, the fourth pressure roller is the pressure roller located at the extreme end in the multiple pressure rollers, that is, the fourth pressure roller is the first pressure roller 211.

The combination roller 310 is a roller structure used to combine the film 500 and the substrate 600. In the present embodiment, just through the cooperation between the combination roller 310 and the first pressure roller 211, the film 500 and the substrate 600 are combined, which can reduce the number of combination rollers 310. Certainly, in some embodiments, the combination mechanism 300 may include multiple combination rollers 310, and the multiple combination rollers 310 cooperate to roll the film 500 and the substrate 600 to combine the film 500 and the substrate 600.

The combination roller 310 cooperates with the first pressure roller 211 to roll the film 500 and the substrate 600 to combine the film 500 and the substrate 600 into an electrode plate 700. The first pressure roller 211 is used as both the component for rolling the blank 400 and the component for combining the film 500 and the substrate 600. One component realizes two functions, simplifying the structure of the electrode plate manufacturing device 10, and reducing the cost of the electrode plate manufacturing device 10.

Referring to FIG. 2 and FIG. 3, in some embodiments, the angular speed of the combination roller 310 is $\omega_1$, the radius of the combination roller 310 is $r_1$, the angular speed of the first pressure roller 211 is $\omega_2$, and the radius of the first pressure roller 211 is $r_2$, satisfying: $\omega_1 \times r_1 > \omega_2 \times r_2$.

A straight line that is located in the same plane as the axes of the first pressure 211 and the combination roller 310 and is perpendicular to the axes of the first pressure 211 and the combination roller 310 is the second straight line. The intersection point of the second straight line and the circumferential surface of the combination roller 310 is the third intersection point, and the intersection point of the second straight line and the circumferential surface of the first pressure roller 211 is the fourth intersection point. The angular speed $\omega_1$ of the combination roller 310 may be the angle that the third intersection point rotates in unit time. The angular speed $\omega_2$ of the first pressure roller 211 may be the angle that the fourth intersection point rotates in unit time.

The product of the angular speed of the combination roller 310 and the radius of the combination roller 310 is a first linear speed $v_1$ (i.e. the linear speed $v_1$ of the third intersection point) at which the combination roller 310 rolls the film 500 and the substrate 600, and the product of the angular speed of the first pressure roller 211 and the radius of the first pressure roller 211 is a

second linear speed $v_2$ (i.e. The linear speed $v_2$ of the fourth intersection point) at which the first pressure roller 211 rolls the film 500 and the substrate 600.

By making the first linear speed greater than the second linear speed, it is beneficial to attaching the combined electrode plate 700 to the combination roller 310, avoiding that the combined electrode plate 700 randomly shifts to cause the electrode plate 700 to be torn or uneven.

In some embodiments, they further satisfy: $r_1 = r_2$ and $\omega_1 > \omega_2$.

"$r_1 = r_2$" means that the radius of the combination roller 310 is equal to the radius of the first pressure roller 211. "$\omega_1 > \omega_2$" means the angular speed of the combination roller 310 is greater than the angular speed of the first pressure roller 211.

By making the radius of the combination roller 310 equal to the radius of the first pressure roller 211 and making the angular speed of the combination roller 310 greater than the angular speed of the first pressure roller 211, the first linear speed is made to be greater than the second linear speed, such that the combined electrode plate 700 is attached to the combination roller 310, avoiding that the combined electrode plate 700 randomly shifts to cause the electrode plate 700 to be torn or uneven.

Referring to FIG. 4, FIG. 4 is a schematic structural view of an electrode plate manufacturing device 10 (the roller diameter of the combination roller 310 is larger than the roller diameter of the first pressure roller 211) provided in some embodiments of the present application. In some embodiments, they further satisfy: $\omega_1 = \omega_2$ and $r_1 > r_2$.

"$\omega_1 = \omega_2$" means the angular speed of the combination roller 310 is equal to the angular speed of the first pressure roller 211. "$r_1 > r_2$" means that the radius of the combination roller 310 is greater than the radius of the first pressure roller 211.

By making the angular speed of the combination roller 310 equal to the angular speed of the first pressure roller 211 and making the radius of the combination roller 310 greater than the radius of the first pressure roller 211, the first linear speed is made to be greater than the second linear speed, such that the combined electrode plate 700 is attached to the combination roller 310, avoiding that the combined electrode plate 700 randomly shifts to cause the electrode plate 700 to be torn or uneven.

In some embodiments, they further satisfy: $1 < (\omega_1 \times r_1)/(\omega_2 \times r_2) \leq 1.5$.

Since $v_1 = \omega_1 \times r_1$ and $v_2 = \omega_2 \times r_2$, "$1 < (\omega_1 \times r_1)/(\omega_2 \times r_2) \leq 1.5$" may be also understood as $1 < v_1/v_2 \leq 1.5$. That is, the ratio of the first linear speed to the second linear speed is greater than 1 and less than or equal to 1.5.

The ratio of the first linear speed to the second linear speed is limited to be greater than 1 and less than or equal to 1.5, which is beneficial to ensuring the quality of rolling and simultaneously enabling the rolled electrode plate 700 to better shift and be attached to the combination roller 310. For example, when $(\omega_1 \times r_1)/(\omega_2 \times r_2)=1$, the combined electrode plate 700 cannot be stably attached onto the combination roller 310, and the electrode plate 700 randomly shifts between the combination roller 310 and the first pressure roller 211, which may cause the electrode plate 700 to be torn or uneven. When $(\omega_1 \times r_1)/(\omega_2 \times r_2)<1$, the electrode plate 700 may shift to the first pressure roller 211, and the first pressure roller 211 is wounded by both the film 500 and the electrode plate 700, which may easily lead to production disorder. However, when $(\omega_1 \times r_1)/(\omega_2 \times r_2)>1.5$, the difference between the first linear speed of the combination roller 310 and the second linear speed of the first pressure roller 211 is too large, resulting in a poor rolling effect on the film 500 and the substrate 600, i.e., poor combination effect.

In some embodiments, the angular speed of the combination roller 310 is $\omega_1$, and the radius of the combination roller 310 is $r_1$, satisfying: $1\text{m/min} \leq \omega_1 \times r_1 \leq 100\text{m/min}$.

"$1\text{m/min} \leq \omega_1 \times r_1 \leq 100\text{m/min}$" may also be $1\text{m/min} \leq v_1 \leq 100\text{m/min}$. In other words, the first linear speed of the combination roller 310 is 1-100m/min. For example, $\omega_1 \times r_1$ may be 1m/min, 10m/min, 20m/min, 30m/min, 40m/min, 50m/min, 60m/min, 70m/min, 80m/min, 90m/min, 100m/min, etc.

The first linear speed of the combination roller 310 is limited to 1-100 m/min, so as to ensure good rolling quality while having high rolling efficiency. When $\omega_1 \times r_1 < 1\text{m/min}$, although the rolling quality is good, the rolling speed is too slow and the rolling efficiency is low. When $\omega_1 \times r_1 > 100\text{m/min}$, although the rolling efficiency is high, the rolling quality is poor.

In some embodiments, the angular speed of the first pressure roller 211 is $\omega_2$, and the radius of the first pressure roller 211 is $r_2$, satisfying: $1\text{m/min} \leq \omega_2 \times r_2 \leq 100\text{m/min}$.

"$1\text{m/min} \leq \omega_2 \times r_2 \leq 100\text{m/min}$" may also be $1\text{m/min} \leq v_2 \leq 100\text{m/min}$. In other words, the second linear speed of the first pressure roller 211 is 1-100m/min. For example, $\omega_2 \times r_2$ may be 1m/min, 10m/min, 20m/min, 30m/min, 40m/min, 50m/min, 60m/min, 70m/min, 80m/min, 90m/min, 100m/min, etc.

The second linear speed of the first pressure roller 211 is limited to 1-100 m/min, so as to ensure good rolling quality while having high rolling efficiency. When $\omega_2 \times r_2 < 1\text{m/min}$, although the rolling quality is good, the rolling speed is too slow and the rolling efficiency is low. When $\omega_2 \times r_2 > 100\text{m/min}$, although the rolling efficiency is high, the rolling quality is poor.

In some embodiments, the width of the combination gap 320 is 0-60 $\mu$m larger than the width of the rolling gap 214 located at the extreme end in the conveying direction of the blank 400.

The width of the combination gap 320 refers to the distance between the third intersection point and the fourth intersection point.

The "width of the rolling gap 214 located at the extreme end in the conveying direction of the blank 400" refers to the width of the rolling gap 210 formed between the first pressure roller 211 and the pressure roller adjacent thereto. In the embodiments in which the widths of the multiple rolling gaps 214 gradually decrease in the conveying direction of the blank 400, the width of the rolling gap 214 located at the extreme end in the conveying direction of the blank 400 refers to the width of the rolling gap 214 with the smallest width, in the multiple rolling gaps 214.

Since the thickness of the substrate 600 is generally 0-60 $\mu$m, the width of the combination gap 320 is 0-60 $\mu$m larger than the width of the rolling gap 214 located at the extreme end. The width of the combination gap 320 may be equal to the width of the rolling gap 214 located at the extreme end in the conveying direction of the blank 400, so that in the combination gap 320, the film 500 and the substrate 600 may be flattened and compacted to ensure that the film 500 is not separated from the substrate 600.

In some embodiments, in the conveying direction of the blank 400, in the two adjacent pressure rollers, the pressure roller near the head end is the second pressure roller 212, and the pressure roller near the tail end is the third pressure roller 213. The angular speed of the second pressure roller 212 is $\omega_3$, and the radius of the second pressure roller 212 is $r_3$. The angular speed of the third pressure roller 213 is $\omega_4$, and the radius of the third pressure roller 213 is $r_4$, satisfying: $\omega_3 \times r_3 < \omega_4 \times r_4$.

The second pressure roller 212 is the pressure roller near the head end in the two adjacent pressure rollers in the conveying direction of the blank 400. The third pressure roller 213 is the pressure roller near the tail end in the two adjacent pressure rollers in the conveying direction of the blank 400. Here, the second pressure roller 212 and the third pressure roller 213 do not specifically refer to a certain pressure roller. For example, referring to FIG. 2, counting from left to right, the second pressure roller 212 is the first pressure roller, and the third pressure roller 213 is the second pressure roller. Meanwhile, since the second pressure roller is the pressure roller located at the tail end in the multiple pressure rollers in the conveying direction of the blank 400, the second pressure roller is the first pressure roller 211. Referring to FIG. 3, counting from left to right, taking the first pressure roller and the second pressure roller being the two adjacent pressure rollers as example, the first pressure roller is the second pressure roller 212, and the second pressure roller is the third pressure roller 213. Taking the second pressure roller and the third pressure roller being the two adjacent pressure rollers as example, the second pressure roller is the second pressure roller 212, and the third pressure roller is the third pressure roller 213. Taking the third pressure roller and the fourth pressure roller being the two adjacent pressure rollers as example, the third pressure roller is the second pressure roller 212, and the fourth pressure roller is the third pressure roller 213. Meanwhile, since the fourth pressure roller is the pressure roller located at the tail end in the multiple pressure rollers in the conveying direction of the blank 400, the fourth pressure roller is also the first pressure roller 211.

A straight line that is located in the same plane as the axes of the second pressure 212 and the third pressure roller 213 and is perpendicular to the axes of the second pressure 212 and the third pressure roller 213 is the third straight line. The intersection point of the third straight line and the circumferential surface of the second pressure roller 212 is the fifth intersection point, and the intersection point of the third straight line and the circumferential surface of the third pressure roller 213 is the sixth intersection point.

$\omega_3 \times r_3$ is the product of the angular speed of the second pressure roller 212 and the radius of the second pressure roller 212, that is, the third linear speed $v_3$ (that is, the linear speed $v_3$ of the fifth intersection point) at which the second pressure roller 212 rolls the blank 400, and $\omega_4 \times r_4$ is the product of the angular speed of the third pressure roller 213 and the radius of the third pressure roller 213, that is, the fourth linear speed $v_4$ (that is, the linear speed $v_4$ of the sixth intersection point) at which the third pressure roller 213 rolls the blank 400.

The product of the angular speed of the second pressure roller 212 and the radius of the second pressure roller 212 is a third linear speed at which the second pressure roller 212 rolls the blank 400, and the product of the angular speed of the third pressure roller 213 and the radius of the third pressure roller 213 is a fourth linear speed at which the third pressure roller 213 rolls the film 500 and the substrate 600. By making the fourth linear speed greater than the third linear speed, it is beneficial to attaching the rolled blank 400 to the third pressure roller 213, avoiding that the rolled blank 400 randomly shifts to cause the rolled blank 400 to be torn or uneven.

In some embodiments, they further satisfy: $r_3 = r_4$ and $\omega_3 < \omega_4$.

"$r_3 = r_4$" means that the radius of the second pressure roller 212 is equal to the radius of third pressure roller 213. "$\omega_4 > \omega_3$" means the angular speed of the third pressure roller 213 is greater than the angular speed of the second pressure roller 212.

By making the radius of the second pressure roller 212 equal to the radius of the third pressure roller 213 and making the angular speed of the third pressure roller 213 greater than the angular speed of the second pressure roller 212, the fourth linear speed is made to be greater than the third linear speed, such that the rolled blank 400 is attached to the third pressure roller 213, avoiding that the rolled blank 400 randomly shifts to cause the rolled blank 400 to be torn or uneven.

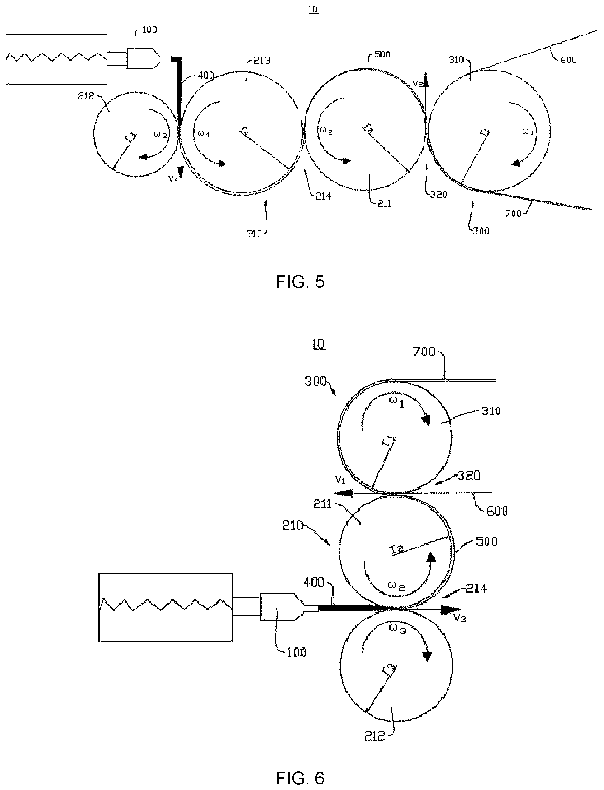

Referring to FIG. 5, FIG. 5 is a schematic structural view of an electrode plate manufacturing device 10 (the roller diameter of the second pressure roller 212 is smaller than the roller diameter of the third pressure roller 213) provided in some embodiments of the present application. In some embodiments, they further satisfy: $\omega_3 = \omega_4$ and $r_3 < r_4$.

"$\omega_3 = \omega_4$" means the angular speed of the second pressure roller 212 is equal to the angular speed of the third pressure roller 213. "$r_4 > r_3$" means that the radius of the third pressure roller 213 is greater than the radius of the second pressure roller 212.

By making the angular speed of the second pressure roller 212 equal to the angular speed of the third pressure roller 213 and making the radius of the third pressure roller 213 greater than the radius of the second pressure roller 212, the fourth linear speed is made to be greater than the third linear speed, such that the rolled blank 400 is attached to the third pressure roller 213, avoiding that the rolled blank 400 randomly shifts to cause the rolled blank 400 to be torn or uneven.

In some embodiments, they further satisfy: $1 < (\omega_4 \times r_4)/(\omega_3 \times r_3) \leq 1.5$.

Since $v_3 = \omega_3 \times r_3$ and $v_4 = \omega_4 \times r_4$, "$1 < (\omega_4 \times r_4)/(\omega_3 \times r_3) \leq 1.5$" may be also understood as $1 < v_4/v_3 \leq 1.5$. That is, the ratio of the fourth linear speed to the third linear speed is greater than 1 and less than or equal to 1.5.

The ratio of the fourth linear speed to the third linear speed is limited to be greater than 1 and less than or equal to 1.5, which is beneficial to ensuring the quality of rolling and simultaneously enabling the rolled blank 400 to better shift and be attached to the third pressure roller 213. For example, when $(\omega_4 \times r_4)/(\omega_3 \times r_3) = 1$, the rolled blank 400 cannot be stably attached to the third pressure roller 213, and the rolled blank 400 randomly shifts between the second pressure roller 212 and the third pressure roller 213, which may cause the rolled blank 400 to be torn or uneven. When $(\omega_4 \times r_4)/(\omega_3 \times r_3) < 1$, the rolled blank 400 may shift towards the second pressure roller 212, which may easily lead to production disorder. However, when $(\omega_4 \times r_4)/(\omega_3 \times r_3) > 1.5$, the difference between the fourth linear speed of the third pressure roller 213 and the third linear speed of the second pressure roller 212 is too large, resulting in a poor rolling effect of the blank 400 and thus poor quality of the film 500.

Referring to FIG. 6, in some embodiments, the angular speed of the second pressure roller 212 is $\omega_3$, and the radius of the second pressure roller 212 is $r_3$, satisfying: $1\text{m/min} \leq \omega_3 \times r_3 \leq 100\text{m/min}$.

"$1\text{m/min} \leq \omega_3 \times r_3 \leq 100\text{m/min}$" may also be $1\text{m/min} \leq v_3 \leq 100\text{m/min}$. In other words, the first linear speed of the second pressure roller 212 is 1~100m/min. For example, $\omega_3 \times r_3$ may be 1m/min, 10m/min, 20m/min, 30m/min, 40m/min, 50m/min, 60m/min, 70m/min, 80m/min, 90m/min, 100m/min, etc.

The third linear speed of the first pressure roller 212 is limited to 1-100 m/min, so as to ensure good rolling quality while having high rolling efficiency. When $\omega_3 \times r_3 < 1\text{m/min}$, although the rolling quality is good, the rolling speed is too slow and the rolling efficiency is low. When $\omega_3 \times r_3 > 100\text{m/min}$, although the rolling efficiency is high, the rolling quality is poor.

In some embodiments, the width of the rolling gap 214 is 10-500 $\mu$m, which can better roll the blank 400 into the film 500.

In some embodiments, the multiple pressure rollers are arranged in a horizontal direction in the space to support the blank 400 when the blank 400 enters the first rolling gap 214.

Referring to FIG. 6, FIG. 6 is a schematic structural view of an electrode plate manufacturing device 10 provided in some other embodiments of the present application. In some other embodiments, the multiple pressure rollers are arranged in a vertical direction in the space. The blank 400 has self-supporting capacity, so even if the multiple pressure rollers are arranged in the vertical direction in the space, the blank 400 does not fall down. However, in the prior art, since the active material powder and/or active material particles are directly supplied to the roller surface, the multiple pressure rollers have to be arranged in the horizontal direction, so that the pressure rollers can support the active material powder and/or active material particles.

Certainly, since the blank 400 in the present embodiment has self-supporting capacity, the multiple pressure rollers can be arranged randomly, so as to improve the space utilization rate and increase the flexibility of providing the pressure rollers.

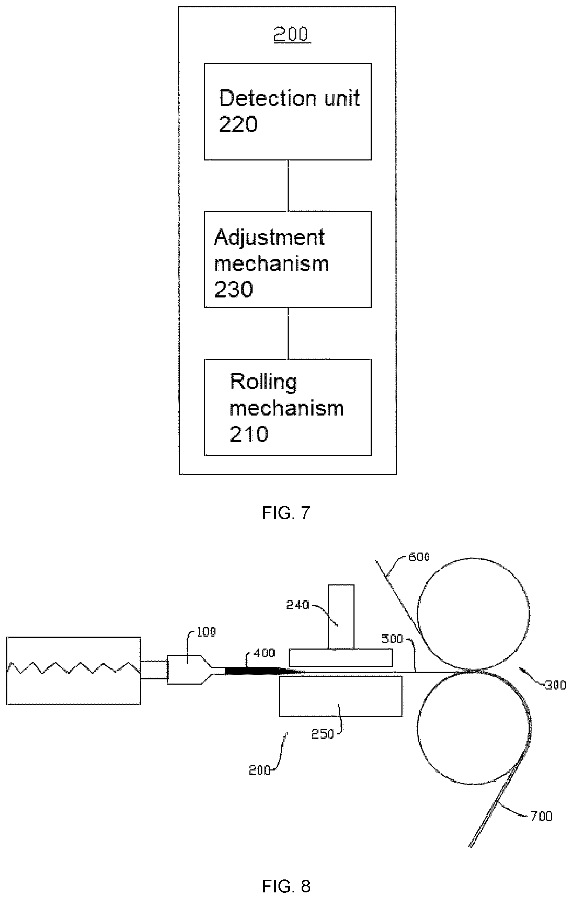

Referring to FIG. 7, FIG. 7 is a schematic block diagram of a film forming mechanism 200 provided in some embodiments of the present application. In some embodiments, the film forming mechanism 200 further includes a detection unit 220 and an adjustment mechanism 230, wherein the detection unit 220 is used to detect the roller pressure of each of the pressure rollers for pressing the blank 400. The adjustment mechanism is connected with the pressure roller, and the adjustment mechanism 230 is used to increase or decrease the pressure applied to the pressure roller according to the detection result of the detection unit.

The detection unit 220 is a component for detecting the pressure on the first intersection point, the second intersection point, the fifth intersection point or the sixth intersection point. The detection unit 220 may be a pressure sensor or a piezoelectric sensor. The adjustment mechanism 230 is a mechanism connected with the pressure rollers and capable of changing the pressures on the pressure rollers. For example, the adjustment mechanism 230 may be a hydraulic pressurization mechanism, a pneumatic pressurization mechanism, an electric pressurization mechanism, etc.

The detection unit 220 is provided to detect the roller pressure for rolling the blank 400, and when the roller pressure is relatively large, the adjustment mechanism 230 reduces the pressure applied to the pressure roller. When the roller pressure is relatively small, the adjustment mechanism 230 increases the pressure applied to the pressure roller, so that the roller pressure remains within a preset range. As a result, the roller pressure for rolling the blank 400 is relatively uniform, which is beneficial to improving the quality of the formed film 500.

In some embodiments, the preset range is 0.1-50T, and the effect of rolling the blank 400 is better when the roller pressure is within this range.

Referring to FIG. 8, FIG. 8 is a schematic structural view of an electrode plate manufacturing device 10 provided in yet some embodiments of the present application. In yet some embodiments, the film forming mechanism 200 includes a first extrusion element 240 and a second extrusion element 250, and the second extrusion element 250 is arranged opposite to the first extrusion element 240. The second extrusion element 250 and the first extruded element 240 are used to cooperate to extrude the blank 400, so as to thin the blank 400 to form the film 500.

The first extrusion element 240 and the second extruded element 250 can cooperate to extrude the blank 400, so as to reduce the thickness of the blank 400 to shape the blank 400 into the film 500. The first extrusion element 240 may be a pressure plate, and the second extrusion element 250 may be a supporting table. When working, the extrusion mechanism 100 extrudes out a certain amount of blank 400 to between the first extrusion element 240 and the second extrusion element 250, and then suspends the extrusion. The first extrusion element 240 moves towards the second extruded element 250 to extrude and thin the blank 400, to shape the blank 400 into the film 500. Then, the combination mechanism 300 combines the film 500 and the substrate 600 to form the electrode plate 700. The extrusion mechanism 100 continues to extrude, and the above steps are repeated to continuously produce the electrode plates 700.

The blank is extruded through the first extrusion element 240 and the second extrusion element 250, such that the blank 400 is extruded and thinned to form the film 500, enabling high extrusion efficiency and small occupied area.

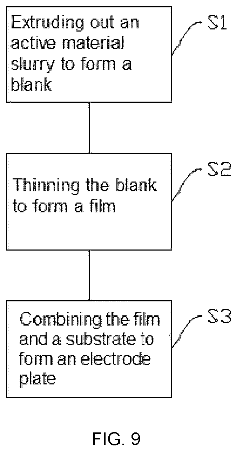

Referring to FIG. 9, FIG. 9 is a schematic block diagram of an electrode plate 700 manufacturing method provided in some embodiments of the present application. Embodiments of the present application further provide an electrode plate 700 manufacturing method, the electrode plate 700 manufacturing method including:

Step S1: extruding out an active material slurry to form a blank 400;

Step S2: thinning the blank 400 to form a film 500; and

Step S3: combining the film 500 and a substrate 600 to form an electrode plate 700.

By extruding out the active material slurry to form the blank 400, the powder and particles in the active material slurry may be mixed evenly. By forming the blank 400 into the film 500, it is beneficial to controlling the thickness and uniformity of the formed film 500, compared to directly forming a film 500 from the active material powder and particles. By using the electrode plate 700 manufacturing method to manufacture the electrode plate 700, the uniformity of the active material layer is good, the performance of the electrode plate 700 is excellent, and the manufacturing efficiency is high.

According to some embodiments of the present application, reference is made to FIG. 2 to FIG. 5.

Embodiments of the present application provide an electrode plate manufacturing device 10, the electrode plate manufacturing device 10 including an extrusion mechanism 100, a film forming mechanism 200 and a combination mechanism 300. The extrusion mechanism 100 is used to extrude out the active material slurry to form a blank 400. The film forming mechanism 200 is provided downstream of the extrusion mechanism 100, and the film forming mechanism 200 is used to thin the blank 400 to form a film 500. The combination mechanism 300 is provided downstream of the film forming mechanism 200, and the combination mechanism 300 is used to combine the film 500 and the substrate 600 to form an electrode plate 700.

The film forming mechanism 200 includes a rolling mechanism 210, and the rolling mechanism 210 is used for rolling the blank 400 to thin the blank 400 to form the film 500. The rolling mechanism 210 includes multiple pressure rollers, wherein a rolling gap 214 for allowing the blank 400 to pass therethrough is formed between two adjacent pressure rollers. In the conveying direction of the blank 400, in the multiple pressure rollers, the pressure roller located at the tail end is the first pressure roller. The combination mechanism 300 includes a combination roller 310, and a combination gap 320 for allowing the film 500 and the substrate 600 to pass therethrough is formed between the combination roller 310 and the first pressure roller 211.

The angular speed of combination roller 310 is $\omega_1$, the radius of the combination roller 310 is $r_1$, and the angular speed of the first pressure roller 211 is $\omega_2$, and the radius of the first pressure roller 211 is $r_2$, satisfying: $\omega_1 \times r_1 > \omega_2 \times r_2$.

In the conveying direction of the blank 400, in the two adjacent pressure rollers, the pressure roller near the head end is a second pressure roller 212, and the pressure roller near the tail end is a third pressure roller 213, the angular speed of the second pressure roller 212 is $\omega_3$, the radius of the second pressure roller 212 is $r_3$, the angular speed of the third pressure roller 213 is $\omega_4$, and the radius of the third pressure roller 213 is $r_4$, satisfying: $\omega_3 \times r_3 < \omega_4 \times r_4$.

The electrode plate manufacturing device 10 extrudes, through the extrusion mechanism 100, the active material slurry out to form a blank 400, so that the powder and particles in the active material slurry may be mixed evenly. The blank 400 is formed into a film 500 through the film forming mechanism 200, which is beneficial to controlling the thickness and uniformity of the formed film 500, compared to directly forming a film 500 from the active material powder and particles. By using the electrode plate manufacturing device 10 to manufacture the electrode plate 700, the uniformity of the active material layer is good, the performance of the electrode plate 700 is excellent, and the manufacturing efficiency is high.

By means of rolling the blank 400 using the rolling mechanism 210, the blank 400 is thinned to form the film 500, enabling high efficiency and good uniformity. By providing the multiple pressure rollers, the multiple pressure rollers can gradually thin the blank 400 to form the film 500, wherein the degree of thinning each time may not be too large, which is beneficial to improving the uniformity and thickness consistency of the film 500.

The combination roller 310 cooperates with the first pressure roller 211 to roll the film 500 and the substrate 600 to combine the film 500 and the substrate 600 into an electrode plate 700. The first pressure roller 211 is used as both the component for rolling the blank 400 and the component for combining the film 500 and the substrate 600. One component realizes two functions, simplifying the structure of the electrode plate manufacturing device 10, and reducing the cost of the electrode plate manufacturing device 10.

The product of the angular speed of the combination roller 310 and the radius of the combination roller 310 is a first linear speed at which the combination roller 310 rolls the film 500 and the substrate 600, and the product of the angular speed of the first pressure roller 211 and the radius of the first pressure roller 211 is a second linear speed at which the first pressure roller 211 rolls the film 500 and the substrate 600. By making the first linear speed greater than the second linear speed, it is beneficial to attaching the combined electrode plate 700 to the combination roller 310, avoiding that the combined electrode plate 700 randomly shifts to cause the electrode plate 700 to be torn or uneven.

The product of the angular speed of the second pressure roller 212 and the radius of the second pressure roller 212 is a third linear speed at which the second pressure roller 212 rolls the blank 400, and the product of the angular speed of the third pressure roller 213 and the radius of the third pressure roller 213 is a fourth linear speed at which the third pressure roller 213 rolls the film 500 and the substrate 600. By making the fourth linear speed greater than the third linear speed, it is beneficial to attaching the rolled blank 400 to the third pressure roller 213, avoiding that the rolled blank 400 randomly shifts to cause the rolled blank 400 to be torn or uneven.

Since the blank 400 in the present embodiment has self-supporting capacity, the multiple pressure rollers can be arranged randomly, so as to improve the space utilization rate and increase the flexibility of providing the pressure rollers.

The above are only preferred embodiments of the present application, and are not intended to limit the present application. For those skilled in the art, there may be various modifications and changes in the present application. Any modifications, equivalent replacements, improvements, etc. made within the principles of the present application shall be included within the protection scope of the present application as defined by the appended claims.

## Claims

1. An electrode plate manufacturing device (10), comprising:

   an extrusion mechanism (100), configured to extrude out an active material slurry to form a blank (400); and
   a film forming mechanism (200), provided downstream of the extrusion mechanism (100), wherein the film forming mechanism (200) is configured to thin the blank (400) to form a film; **characterized in that** the electrode plate manufacturing device (10) further comprises:
   a combination mechanism (300), provided downstream of the film forming mechanism (200), wherein the combination mechanism (300) is configured to combine the film and a substrate to form an electrode plate (700).

2. The electrode plate manufacturing device (10) according to claim 1, wherein the film forming mechanism (200) comprises a rolling mechanism (210), and the rolling mechanism (210) is configured to roll the blank (400) to thin the blank (400) to form the film.

3. The electrode plate manufacturing device (10) according to claim 2, wherein the rolling mechanism (210) comprises multiple pressure rollers, and a rolling gap configured for allowing the blank (400) to pass therethrough is formed between two adjacent pressure rollers.

4. The electrode plate manufacturing device (10) according to claim 3, wherein multiple rolling gaps are formed between the multiple pressure rollers, and widths of the multiple rolling gaps gradually decrease in a conveying direction of the blank (400).

5. The electrode plate manufacturing device (10) according to claim 3 or 4, wherein in the conveying direction of the blank (400), a pressure roller located at a tail end in the multiple pressure rollers is a first pressure roller (211), and the combination mechanism (300) comprises a combination roller, wherein a combination gap (320) configured for allowing the film and the substrate to pass therethrough is formed between the combination roller and the first pressure roller (211).

6. The electrode plate manufacturing device (10) according to claim 5, wherein an angular speed of the combination roller is $\omega_1$, a radius of the combination roller is $r_1$, an angular speed of the first pressure roller (211) is $\omega_2$, and a radius of the first pressure roller (211) is $r_2$, satisfying: $\omega_1 \times r_1 > \omega_2 \times r_2$.

7. The electrode plate manufacturing device (10) according to claim 6, wherein $r_1 = r_2$ and $\omega_1 > \omega_2$.

8. The electrode plate manufacturing device (10) according to claim 6, wherein $\omega_1 = \omega_2$ and $r_1 > r_2$.

9. The electrode plate manufacturing device (10) according to claim 6, wherein

$$1 < (\omega_1 \times r_1)/(\omega_2 \times r_2) \leq 1.5.$$

10. The electrode plate manufacturing device (10) according to claim 5 or 6, wherein an angular speed of the combination roller is $\omega_1$, and a radius of the combination roller is $r_1$, satisfying: $1\text{m/min} \leq \omega_1 \times r_1 \leq 100\text{m/min}$.

11. The electrode plate manufacturing device (10) according to claim 5, wherein a width of the combination gap (320) is 0-60 $\mu$m larger than a width of a rolling gap (214) located at an extreme end in the conveying direction of the blank (400).

12. The electrode plate manufacturing device (10) according to claim 3, wherein in the conveying direction of the blank (400), in the two adjacent pressure rollers, a pressure roller near a head end is a second pressure roller (212), and a pressure roller near the tail end is a third pressure roller (213), an angular speed of the second pressure roller (212) is $\omega_3$, a radius of the second pressure roller (212) is $r_3$, an angular speed of the third pressure roller (213) is $\omega_4$, and a radius of the third pressure roller (213) is $r_4$, satisfying: $\omega_3 \times r_3 < \omega_4 \times r_4$, or
wherein the film forming mechanism (200) further comprises:
a detection unit (220), configured for detecting a roller pressure of each of the pressure rollers for pressing the blank (400); and
an adjustment mechanism (230) connected with the pressure roller, wherein the adjustment mechanism (230) is configured to increase or decrease a pressure applied to the pressure roller based on a detection result of the detection unit (220).

13. The electrode plate manufacturing device (10) according to claim 12, wherein $r_3 = r_4$ and $\omega_3 < \omega_4$, or wherein $\omega_3 = \omega_4$ and $r_3 < r_4$, or wherein $1 < (\omega_4 \times r_4)/(\omega_3 \times r_3) \leq 1.5$.

14. The electrode plate manufacturing device (10) according to claim 1, wherein the film forming mechanism (200) comprises:

a first extrusion element (240); and
a second extrusion element (250), arranged opposite to the first extrusion element (240), wherein the second extrusion element (250) and the first extrusion element (240) are configured to cooperate with each other to extrude the blank (400) to thin the blank (400) to form the film.

15. An electrode plate manufacturing method, comprising:

extruding out an active material slurry to form a blank (400); and
thinning the blank (400) to form a film (500); **characterized in that** the method further comprises:
combining the film (500) and a substrate (600) to form an electrode plate (700).


**Patentansprüche**

1. Elektrodenplatten-Herstellvorrichtung (10), umfassend:

einen Extrusionsmechanismus (100), konfiguriert zum Extrudieren einer aktiven Materialaufschlämmung, um einen Rohling (400) zu bilden; und
einen Filmbildungsmechanismus (200), stromabwärts des Extrusionsmechanismus (100) angeordnet, wobei der Filmbildungsmechanismus (200) konfiguriert ist, den Rohling (400) zu verdünnen, um einen Film zu bilden;
**dadurch gekennzeichnet, dass** die Elektrodenplatten-Herstellvorrichtung (10) ferner umfasst:
einen Kombinationsmechanismus (300), stromabwärts des Filmbildungsmechanismus (200) angeordnet, wobei der Kombinationsmechanismus (300) konfiguriert ist, den Film und ein Substrat zu kombinieren, um eine Elektrodenplatte (700) zu bilden.

2. Die Elektrodenplatten-Herstellvorrichtung (10) nach Anspruch 1, wobei der Filmbildungsmechanismus (200) einen Walzmechanismus (210) umfasst, und der Walzmechanismus (210) konfiguriert ist, den Rohling (400) zu walzen, um den Rohling (400) zu verdünnen und den Film zu bilden.

3. Die Elektrodenplatten-Herstellvorrichtung (10) nach Anspruch 2, wobei der Walzmechanismus (210) mehrere Druckwalzen umfasst und ein Walzspalt, konfiguriert zum Durchlassen des Rohlings (400), zwischen zwei benachbarten Druckwalzen gebildet ist.

4. Die Elektrodenplatten-Herstellvorrichtung (10) nach Anspruch 3, wobei mehrere Walzspalte zwischen den mehreren Druckwalzen gebildet sind und die Breiten der mehreren Walzspalte in Förderrichtung des Rohlings (400) allmählich abnehmen.

5. Die Elektrodenplatten-Herstellvorrichtung (10) nach Anspruch 3 oder 4, wobei in Förderrichtung des Rohlings (400) eine Druckwalze, die sich am hinteren Ende der mehreren Druckwalzen befindet, eine erste Druckwalze (211) ist, und der Kombinationsmechanismus (300) eine Kombinationswalze umfasst, wobei ein Kombinationsspalt (320), konfiguriert zum Durchlassen des Films und des Substrats, zwischen der Kombinationswalze und der ersten Druckwalze (211) gebildet ist.

6. Die Elektrodenplatten-Herstellvorrichtung (10) nach Anspruch 5, wobei eine Winkelgeschwindigkeit der Kombinationswalze $\omega_1$ ist, ein Radius der Kombinationswalze $r_1$ ist, eine Winkelgeschwindigkeit der ersten Druckwalze (211) $\omega_2$ ist und ein Radius der ersten Druckwalze (211) $r_2$ ist, wobei gilt: $\omega_1 \times r_1 > \omega_2 \times r_2$.

7. Die Elektrodenplatten-Herstellvorrichtung (10) nach Anspruch 6, wobei $r_1 = r_2$ und $\omega_1 > \omega_2$.

8. Die Elektrodenplatten-Herstellvorrichtung (10) nach Anspruch 6, wobei $\omega_1 = \omega_2$ und $r_1 > r_2$.

9. Die Elektrodenplatten-Herstellvorrichtung (10) nach Anspruch 6, wobei

$$1 < (\omega_1 \times r_1)/(\omega_2 \times r_2) \leq 1{,}5.$$

10. Die Elektrodenplatten-Herstellvorrichtung (10) nach Anspruch 5 oder 6, wobei eine Winkelgeschwindigkeit der Kombinationswalze $\omega_1$ ist und ein Radius der Kombinationswalze $r_1$ ist, wobei gilt: $1\,\text{m/min} \leq \omega_1 \times r_1 \leq 100\,\text{m/min}$.

11. Die Elektrodenplatten-Herstellvorrichtung (10) nach Anspruch 5, wobei eine Breite des Kombinationsspalts (320) um 0-60 $\mu$m größer ist als eine Breite eines Walzspalts (214), der sich am äußersten Ende in Förderrichtung des Rohlings (400) befindet.

12. Die Elektrodenplatten-Herstellvorrichtung (10) nach Anspruch 3, wobei in Förderrichtung des Rohlings (400) unter den zwei benachbarten Druckwalzen eine Druckwalze nahe dem vorderen Ende eine zweite Druckwalze (212) ist und eine Druckwalze nahe dem hinteren Ende eine dritte Druckwalze (213) ist, wobei eine Winkelgeschwindigkeit der zweiten Druckwalze (212) $\omega 3$ ist, ein Radius der zweiten Druckwalze (212) $r_3$ ist, eine Winkelgeschwindigkeit der dritten Druckwalze (213) $\omega 4$ ist und ein Radius der dritten Druckwalze (213) $r_4$ ist, wobei gilt: $\omega_3 \times r_3 < \omega_4 \times r_4$, oder wobei der Filmbildungsmechanismus (200) ferner umfasst:

> eine Detektionseinheit (220), konfiguriert zum Erfassen eines Walzendrucks jeder Druckwalze zum Pressen des Rohlings (400); und
> einen Einstellmechanismus (230), verbunden mit der Druckwalze, wobei der Einstellmechanismus (230) konfiguriert ist, einen auf die Druckwalze ausgeübten Druck basierend auf einem Detektionsergebnis der Detektionseinheit (220) zu erhöhen oder zu verringern.

13. Die Elektrodenplatten-Herstellvorrichtung (10) nach Anspruch 12, wobei $r_3 = r_4$ und $\omega_3 < \omega_4$, oder wobei $\omega_3 = \omega_4$ und $r_3 < r_4$, oder wobei

$$1 < (\omega_4 \times r_4)/(\omega_3 \times r_3) \leq 1{,}5.$$

14. Die Elektrodenplatten-Herstellvorrichtung (10) nach Anspruch 1, wobei der Filmbildungsmechanismus (200) umfasst:

> ein erstes Extrusionselement (240); und
> ein zweites Extrusionselement (250), gegenüber dem ersten Extrusionselement (240) angeordnet, wobei das zweite Extrusionselement (250) und das erste Extrusionselement (240) konfiguriert sind, miteinander zusammenzuarbeiten, um den Rohling (400) zu extrudieren, den Rohling (400) zu verdünnen und den Film zu bilden.

15. Verfahren zur Herstellung einer Elektrodenplatte, umfassend:

> Extrudieren einer aktiven Materialaufschlämmung, um einen Rohling (400) zu bilden; und
> Verdünnen des Rohlings (400), um einen Film (500) zu bilden;
> **dadurch gekennzeichnet, dass** das Verfahren ferner umfasst:
> Kombinieren des Films (500) und eines Substrats (600), um eine Elektrodenplatte (700) zu bilden.

**Revendications**

1. Dispositif de fabrication de plaque d'électrode (10), comprenant :

> un mécanisme d'extrusion (100), configuré pour extruder une boue de matériau actif afin de former une ébauche (400) ; et
> un mécanisme de formation de film (200), disposé en aval du mécanisme d'extrusion (100), ledit mécanisme de formation de film (200) étant configuré pour amincir l'ébauche (400) afin de former un film ;
> **caractérisé en ce que** le dispositif de fabrication de plaque d'électrode (10) comprend en outre :
> un mécanisme de combinaison (300), disposé en aval du mécanisme de formation de film (200), ledit mécanisme de combinaison (300) étant configuré pour combiner le film et un substrat afin de former une plaque d'électrode (700).

2. Le dispositif de fabrication de plaque d'électrode (10) selon la revendication 1, dans lequel le mécanisme de formation de film (200) comprend un mécanisme de laminage (210), et le mécanisme de laminage (210) est configuré pour laminer l'ébauche (400) afin d'amincir l'ébauche (400) pour former le film.

3. Le dispositif de fabrication de plaque d'électrode (10) selon la revendication 2, dans lequel le mécanisme de laminage (210) comprend plusieurs rouleaux de pression, et un intervalle de laminage configuré pour permettre le passage de l'ébauche (400) est formé entre deux rouleaux de pression adjacents.

4. Le dispositif de fabrication de plaque d'électrode (10) selon la revendication 3, dans lequel plusieurs intervalles de laminage sont formés entre les rouleaux de pression multiples, et les largeurs des intervalles de laminage diminuent progressivement dans la direction de convoyage de l'ébauche (400).

5. Le dispositif de fabrication de plaque d'électrode (10) selon la revendication 3 ou 4, dans lequel, dans la direction de convoyage de l'ébauche (400), un rouleau de pression situé à l'extrémité arrière parmi les rouleaux de pression multiples est un premier rouleau de pression (211), et le mécanisme de combinaison (300) comprend un rouleau de combinaison, un intervalle de combinaison (320) configuré pour permettre le passage du film et du substrat étant formé entre le rouleau de combinaison et le premier rouleau de pression (211).

6. Le dispositif de fabrication de plaque d'électrode (10) selon la revendication 5, dans lequel une vitesse angulaire du rouleau de combinaison est $\omega_1$, un rayon du rouleau de combinaison est $r_1$, une vitesse angulaire du premier rouleau de pression (211) est $\omega_2$, et un rayon du premier rouleau de pression (211) est $r_2$, satisfaisant :

$$\omega_1 \times r_1 > \omega_2 \times r_2.$$

7. Le dispositif de fabrication de plaque d'électrode (10) selon la revendication 6, dans lequel $r_1 = r_2$ et $\omega_1 > \omega_2$.

8. Le dispositif de fabrication de plaque d'électrode (10) selon la revendication 6, dans lequel $\omega_1 = \omega_2$ et $r_1 > r_2$.

9. Le dispositif de fabrication de plaque d'électrode (10) selon la revendication 6, dans lequel $1 < (\omega_1 \times r_1)/(\omega_2 \times r_2) \leq 1.5$.

10. Le dispositif de fabrication de plaque d'électrode (10) selon la revendication 5 ou 6, dans lequel une vitesse angulaire du rouleau de combinaison est $\omega_1$, et un rayon du rouleau de combinaison est $r_1$, satisfaisant : $1m/min \leq \omega_1 \times r_1 \leq 100m/min$.

11. Le dispositif de fabrication de plaque d'électrode (10) selon la revendication 5, dans lequel une largeur de l'intervalle de combinaison (320) est supérieure de 0 à 60 $\mu m$ à une largeur d'un intervalle de laminage (214) situé à l'extrémité dans la direction de convoyage de l'ébauche (400).

12. Le dispositif de fabrication de plaque d'électrode (10) selon la revendication 3, dans lequel, dans la direction de convoyage de l'ébauche (400), parmi deux rouleaux de pression adjacents, un rouleau de pression proche de l'extrémité avant est un deuxième rouleau de pression (212), et un rouleau de pression proche de l'extrémité arrière est un troisième rouleau de pression (213), une vitesse angulaire du deuxième rouleau de pression (212) est $\omega_3$, un rayon du deuxième rouleau de pression (212) est $r_3$, une vitesse angulaire du troisième rouleau de pression (213) est $\omega_4$, et un rayon du troisième rouleau de pression (213) est r4, satisfaisant : $\omega_3 \times r_3 < \omega_4 \times r_4$, ou

dans lequel le mécanisme de formation de film (200) comprend en outre :

   une unité de détection (220), configurée pour détecter une pression de rouleau de chacun des rouleaux de pression pour presser l'ébauche (400) ; et
   un mécanisme d'ajustement (230) connecté au rouleau de pression, le mécanisme d'ajustement (230) étant configuré pour augmenter ou diminuer une pression appliquée au rouleau de pression en fonction d'un résultat de détection de l'unité de détection (220).

13. Le dispositif de fabrication de plaque d'électrode (10) selon la revendication 12, dans lequel $r_3 = r_4$ et $\omega_3 < \omega_4$, ou dans lequel $\omega_3 = \omega_4$ et $r_3 < r_4$, ou dans lequel $1 < (\omega_4 \times r_4)/(\omega_3 \times r_3) \leq 1,5$.

14. Le dispositif de fabrication de plaque d'électrode (10) selon la revendication 1, dans lequel le mécanisme de formation de film (200) comprend :

   un premier élément d'extrusion (240) ; et
   un deuxième élément d'extrusion (250), disposé en face du premier élément d'extrusion (240), le deuxième élément d'extrusion (250) et le premier élément d'extrusion (240) étant configurés pour coopérer afin d'extruder l'ébauche (400) pour amincir l'ébauche (400) afin de former le film.

15. Procédé de fabrication de plaque d'électrode, comprenant :

   extruder une boue de matériau actif pour former une ébauche (400) ; et
   amincir l'ébauche (400) pour former un film (500) ;
   **caractérisé en ce que** le procédé comprend en outre :
   combiner le film (500) et un substrat (600) pour former une plaque d'électrode (700).

FIG. 1

FIG. 2

FIG. 3

FIG. 4

FIG. 5

FIG. 6

FIG. 7

FIG. 8

Extruding out an
active material
slurry to form a
blank — S1

Thinning the blank
to form a film — S2

Combining the film
and a substrate to
form an electrode
plate — S3

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005236732 A1